# EUROPEAN PATENT APPLICATION

(11) **EP 4 835 310 A1**
(43) Date of publication of application: **04.11.2026**
(21) Application number: 25173343.2
(22) Date of filing: 29.04.2025
(51) Int. Cl.: F16B 19/10

(54) **A BLIND RIVET, METHOD OF FASTENING, AND METHOD OF MANUFACTURE THEREOF**

(71) Applicant: Avdel UK Limited, Woolston, Warrington, WA1 4RF (GB)
(72) Inventor: HERSANT, Carl, Woolston, Warrington, WA1 4RF (GB)
(74) Representative: SBD IPAdmin

(57) **Abstract**

A blind rivet comprises a cold-formed rivet sleeve having a body portion and a head portion, the body portion having a first tapered transition region and a second tapered transition region and a first parallel region between the first tapered transition region and the second tapered transition region, wherein the first parallel region is configured to deform to create at least one blindside bulb when compressed axially by a stem. The stem is configured to be inserted into the rivet sleeve and to apply axial pressure to the rivet sleeve to cause the deformation of the first parallel region.

## Description

### Field

The technology relates to the field of fastening systems, specifically to blind rivets used for securing and permanently fastening metal joints in various applications, such as automotive, aerospace, and construction industries.

### Background

Structural blind rivets are widely used for secure and permanent fastening of metal joints in various applications, such as, but not limited to, truck chassis, shipping containers, and solar power tracking mechanisms. These rivets are typically installed from one side of the joint and provide high strength and stability in the joint shear plane. The strongest structural blind rivets, such as Avdel Avbolt^{®} and Huck BOM^{®} (Blind, Oversized Mechanical locked) rivets, are known for their high-strength joints and reliable performance.

The rivet body is pulled by a stem to generate a blind bulb on the rear surface of the joint, and then the head, in the form of a collar, is swaged by the placing tool anvil such that the collar material deforms plastically into annular grooves on the stem. Once installed, the stem is a close fit within the body to provide high strength in the joint shear plane. High axial pressure is exerted between the collar and the blind bulb to provide joint clamp loads, and because the collar and blind bulb are effectively locked onto the stem, this ensures additional tensile loads applied to the joint will be carried by the stem as well as the body.

However, there are several problems associated with the prior art of structural blind rivets e.g., as shown in EP2240700, EP2337959 and EP0677666. One of the main issues is the limited grip range of the rivets due to the narrow-annealed band in the rivet body. This restricts the combined thickness of the joint layers being fastened, which can lead to insufficient clamping force and reduced joint strength. Additionally, a plain tubular body with work hardening does not deform easily when compressed axially by the stem during placing, resulting in unpredictable and uneven deformation when creating a blindside bulb unless the diameter and wall thickness can be controlled to very tight tolerances. This can negatively impact the joint's performance and stability.

Creating a wider annealed band to overcome these issues is not possible, as it would make the bulb unstable, leading to tilting and an uneven bulb with a smaller footprint on the blind side surface of the joint. This can compromise the joint's strength and stability. Furthermore, the band annealing process requires specialised equipment and is generally time-consuming and expensive for mass-production, making it less cost-effective and limiting the widespread adoption of structural blind rivets in various applications.

In summary, the prior art of structural blind rivets faces challenges in terms of limited grip range, unpredictable and uneven deformation of the rivet body, difficulty in achieving a wider annealed band, and the expensive and time-consuming band annealing process. These issues can compromise the joint's strength, stability, and overall performance, necessitating the development of improved structural blind rivets that can overcome these limitations.

### Summary

According to a first aspect of the disclosure, there is provided a blind rivet comprising a cold-formed rivet sleeve having a body portion and a head portion, the body portion having a first tapered transition region and a second tapered transition region and a first parallel region between the first tapered transition region and the second tapered transition region, wherein the first parallel region is configured to deform to create at least one blindside bulb when compressed axially; and a stem configured to be inserted into the rivet sleeve and to apply axial pressure to the rivet sleeve to cause the deformation of the first parallel region.

Optionally in some examples, the rivet sleeve further comprises a second parallel region adjacent to the second tapered transition region.

Optionally in some examples, the rivet sleeve further comprises a third tapered transition region adjacent to the second parallel region.

Optionally in some examples, the rivet sleeve is made of low-carbon steel.

Optionally in some examples, the stem is made of hardened and tempered steel.

**In** an embodiment, the rivet sleeve and/or the stem may both be coated with a Zinc-Nickel coating without lubricant.

Optionally in some examples, the first parallel region is configured to deform to create two blindside bulbs when compressed axially by the stem in a minimum grip configuration.

Optionally in some examples, the first parallel region is configured to deform to create one blindside bulb when compressed axially by the stem in a maximum grip configuration.

Optionally in some examples, the first tapered transition region has an angle with respect to the rivet sleeve longitudinal axis in a range of 1.4° to 3.2°.

Optionally in some examples, the first tapered transition region has an angle with respect to the rivet sleeve longitudinal axis of 2.3°.

Optionally in some examples, the second tapered transition region has an angle with respect to the rivet sleeve longitudinal axis in a range of 4.8° to 6.6°.

Optionally in some examples, the second tapered transition region has an angle with respect to the rivet sleeve longitudinal axis in a range of 5.7°.

Optionally in some examples, the rivet sleeve has a hardness in a range of Vickers hardness 180 to 240 Hv5.

Optionally in some examples, the rivet sleeve body portion has an outer diameter in the tail region that is between 0.93 and 0.99 times the stem head diameter.

Optionally in some examples, the first parallel region has a length equal to 0. 50 to 0.70 times the stem head diameter.

Optionally in some examples, the rivet sleeve body portion has an outer diameter in the first parallel region that is slightly smaller than the stem head diameter.

Optionally in some examples, the rivet sleeve body portion wall has a thickness equal to 0.090 to 0.098 times the stem head diameter.

Optionally in some examples, the rivet sleeve is not heat treated. More particularly, the rivet sleeve is not heat treated, or not annealed, at any stage after cold-forming.

Optionally the stem comprises a stem pulling tail having a single pull groove wherein the pull groove comprises at least one tapered surface inclined with respect to a longitudinal axis.

According to a second aspect of the disclosure, a method of fastening the blind rivet is provided, comprising the steps of inserting the blind rivet into a hole in a workpiece; aligning the blind rivet with a desired joint configuration; applying axial pressure to the stem of the blind rivet using a tool anvil; and forming at least one blindside bulb by deforming the first parallel region of the rivet sleeve.

Optionally in some examples, the method further comprises the step of swaging the head portion of the rivet sleeve using the tool anvil to secure the joint.

Optionally in some examples, the method further comprises the step of breaking the pulling tail of the stem to complete the installation process.

According to a third aspect of the disclosure, a method of manufacturing the blind rivet is provided, comprising the steps of cold-heading the rivet body to form the tubular shape; and creating the profiled shape in the tubular body, comprising larger and smaller parallel regions separated by tapered transitions.

Optionally in some examples, the profiled shape is created by cold-forming the tubular body.

### Brief Description of the Drawings

Examples are described in more detail below with reference to the appended drawings.
Figure 1 is a cross-sectional drawing of a blind rivet according to an example;
Figure 2a shows a cross-sectional view of the rivet body without the stem according to an example;
Figure 2b shows a cross-sectional view of the rivet body without the stem according to a second example;
Figure 3 shows a cross-sectional view of the stem without the rivet body according to an example;
Figures 4a to 4f sequentially show a blind rivet in a possible minimum grip configuration during use according to an example;
Figures 5a to 5e sequentially show a blind rivet in a maximum grip configuration during use according to an example;
Figure 6 is a cross-sectional drawing of a blind rivet before a fastening operation according to a third example;
Figure 7a and Fig. 7b schematically show a blind rivet according to the invention after a fastening operation in a first and a second grip configuration;
Figure 8 shows a cross-sectional drawing of a blind rivet before a fastening operation according to yet another example;
Figure 9a to 9b schematically show the blind rivet of Figure 8 after a fastening operation in a first and a second grip configuration; and
Figure 10 shows a close-up cross-sectional side view of the blind rivet shown in Figure 6 according to some examples.

### Detailed Description

The detailed description set forth below provides information and examples of the disclosed technology with sufficient detail to enable those skilled in the art to practise the disclosure.

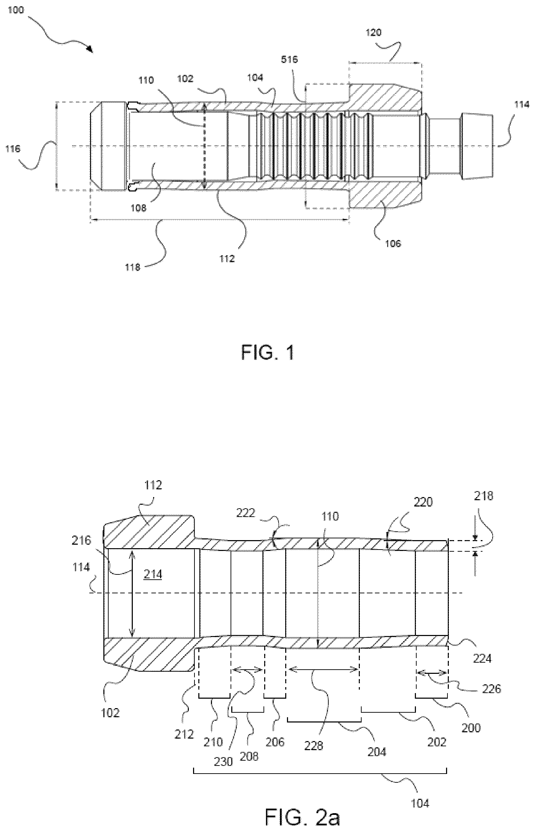

Figure 1 shows a cross-sectional drawing of a blind rivet 100 according to an example. The blind rivet 100 comprises a cold-formed rivet sleeve 102 having a rivet sleeve body portion 104 with a rivet sleeve body portion wall 112 and a rivet sleeve head portion 106, and a stem 108.

The term "cold-formed" means that the blind rivet 100 is made using any metalworking process in which metal is shaped below its recrystallization temperature, usually at the ambient temperature e.g., 20°C. Cold forming can comprise one or more of the following processes e.g., squeezing, bending, drawing, shearing, crimping, and rolling. These cold forming processes are exemplary and not limited to the type of cold forming process that may be applied to the blind rivet 100 during its manufacture. Various cold forming techniques that may be applied include, but are not limited to, impact extrusion, cold heading, thread rolling, progressive die stamping, swaging, roll forming, cold drawing, rotary swaging, radial forming, coining, sizing, cold forging, flow forming, stretch forming, crimping, clinching, orbital forming, roller burnishing, wire drawing, and sheet metal bending. This is in contrast to a hot formed process such as hot rolling, forging, welding etc.

In some examples, the rivet sleeve 102 is formed using cold forming processes and is not subjected to heat treatment. Indeed, in some examples, the rivet sleeve 102 is not annealed.

In some other examples, part of the blind rivet 100 is formed using cold forming processes without heat treatment and part of the blind rivet 100 is formed using cold forming processes and undergoes heat treatment processes e.g., annealing. In some examples, a first parallel region 204, which is discussed below is not heat treated and one or more other parts of the rivet sleeve body portion 104 are subject to heat treatment.

In some examples, during manufacture of the rivet sleeve 102, the rivet sleeve 102 is cold-headed into a tubular shape. The profiled shape of the rivet sleeve 102 is then cold-formed with rolling or one or more other cold forming processes.

The stem 108 is configured to be inserted into the rivet sleeve 102 and to apply axial pressure in a direction along a rivet sleeve longitudinal axis 114 to the rivet sleeve 102. The stem 108 has a stem head diameter 116 as shown in Figure 1. The size of the stem head diameter 116 determines one or more dimensions of the rivet sleeve 102 as discussed below. The axial pressure exerted by the stem 108 on the rivet sleeve body portion 104 is configured to cause the deformation of the first parallel region 204 (best shown in Figure 2a).

In some examples, the rivet sleeve body portion 104 is made of low-carbon steel, which is cold-formed to provide a harder and stronger material than fully annealed rivet bodies. The rivet sleeve body portion 104 may have a hardness in a preferred range of Vickers hardness 180 - 240 Hv5, measured using standards ISO 6507-1 or ASTM E384.

In some examples, the rivet sleeve head portion 106 is designed as a collar structure that is softer than the stem 108. This design allows the material of the rivet sleeve head portion 106 to flow radially inwards during the swaging process, enabling it to interlock with the locking grooves on the locking surface region 242 and provide a secure connection between the rivet sleeve 102 and the stem 108.

In some examples, the rivet sleeve head portion 106 is made of the same material as the rivet sleeve body portion 104, such as low-carbon steel. However, in other examples, the rivet sleeve head portion 106 can be made from a low-carbon steel which is softer or harder than the rivet sleeve body portion 104.

The hardness of the rivet sleeve head portion 106 may be within a preferred range of Vickers hardness 180 - 240 Hv5, as measured using standards ISO 6507-1 or ASTM E384.

In some examples, the rivet sleeve head portion 106 may have a rivet sleeve head portion length 120, which may be determined based on the desired joint configuration and the dimensions of the rivet sleeve body portion 104. The rivet sleeve body portion 104 may also have a rivet sleeve body portion length 118, which may be determined based on the desired joint configuration and the dimensions of the rivet sleeve head portion 106. Both the dimensions of the rivet sleeve body portion length 118 and the rivet sleeve head portion length 120 are shown in Figure 1. Exemplary dimensions of the blind rivet 100 will be discussed in more detail below with reference to later Figures.

The lengths of the rivet sleeve head portion 106 and the rivet sleeve body portion 104 may be designed to accommodate various joint layer thicknesses and to provide a secure and permanent fastening of the metal joints in different grip configurations.

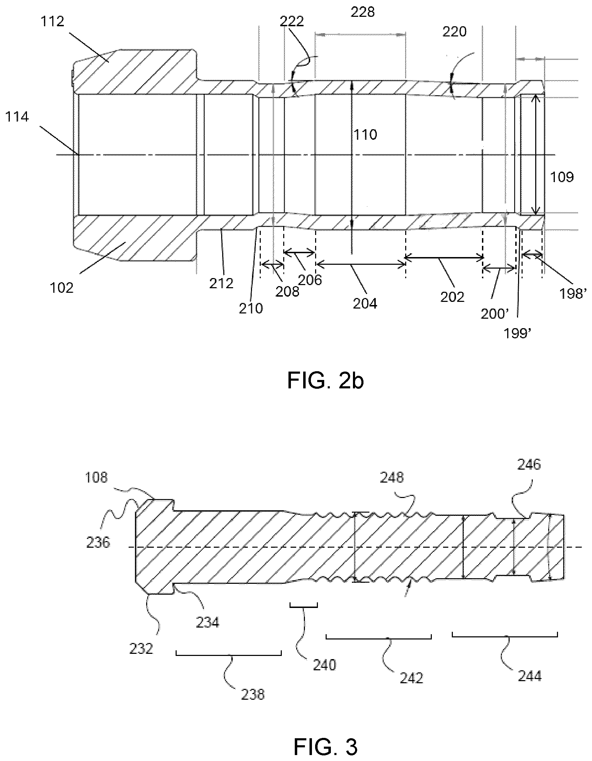

Turning to Figure 2a, the rivet sleeve 102 will be discussed in more detail. Figure 2a shows a cross-sectional view of a rivet sleeve 102 without the stem 108 according to a first embodiment. Figure 2b shows a cross-sectional view of a rivet sleeve 102 without the stem 108 according to a second embodiment. The rivet sleeve 102 has a rivet sleeve body portion 104 with a tail region 200 (for Figure 2a), 198' (for Figure 2b), a first tapered transition region 202, a first parallel region 204, a second tapered transition region 206, a second parallel region 208, a third tapered transition region 210 and a third parallel region 212. These different regions of the rivet sleeve 102 will now be discussed in further detail. Additionally, as depicted on Figure 2b, the rivet sleeve 102 may have between the tail region 198' and the first tapered transition region 202, a tail tapered region 199' and a tail parallel region 200'.

In some examples, the rivet sleeve body portion 104 comprises a tail region 200, 198' with an end face 224. The tail region 200 optionally has a tail region length 226 equal to 0.29 times the stem head diameter 116. The end face 224 may be angled with respect to a plane perpendicular to the rivet sleeve longitudinal axis 114 and engages a reciprocal angled recess on the stem underhead 234 that the end face 224 abuts upon assembly of the blind rivet 100. This engagement provides additional stability and strength to the joint.

As depicted in Figure 2b, the tail region 198' forms an offset such that the inner diameter 109 of the rivet sleeve 102 at the tail region 198' is larger than the inner diameter of the rivet sleeve 102 at the tail parallel region 200', while the thickness of the rivet sleeve remains constant at this level. This geometry increases the stability and allows a correct collapsing of the rivet sleeve during the setting. More particularly this geometry with this "step" is added for the crimping with the collapsible collet in the heading machine, it allows for controlling the bulge (or flare out or trumpet shape forming the bulb(s)) produced.

In one example, the blind rivet 100 comprises a cold-formed rivet sleeve 102 having a rivet sleeve body portion 104 with a profiled shape that includes a first tapered transition region 202 and a second tapered transition region 206 as shown in Figure 2a. The profiled shape of the rivet sleeve body portion 104 allows for a wider grip range between a minimum grip configuration and a maximum grip configuration and adaptable deformation, providing secure and permanent fastening of metal joints with various thicknesses. Advantageously, the arrangement of the first parallel region 204 and the first and second tapered transition regions 202, 206 provide a grip range which is more than twice that of the prior art annealed fasteners.

In some examples, the first tapered transition region 202 is located between the tail region 200 and the first parallel region 204 of the rivet sleeve body portion 104. The first tapered transition region 202 has an angled surface with respect to the rivet sleeve longitudinal axis 114.

In one example, the first tapered transition region 202 has a first tapered transition angle 220 with respect to the rivet sleeve longitudinal axis 114 in a preferred range of 1.4° to 3.2°. In some examples, the first tapered transition angle 220 is 2.3°. The first tapered transition angle 220 of the first tapered transition region 202 may be adjusted to accommodate different joint configurations and to provide optimal joint strength and stability.

In some examples, the second tapered transition region 206 is located between the first parallel region 204 and the second parallel region 208 of the rivet sleeve body portion 104. The second tapered transition region 206 has an angled surface with respect to the rivet sleeve longitudinal axis 114, which allows for a steeper tapered transition than the first tapered transition region 202.

In one example, the second tapered transition region 206 has a second tapered transition angle 222 with respect to the rivet sleeve longitudinal axis 114 in a range of 4.8° to 6.6°. In some examples, the second tapered transition angle 222 is 5.7°. The second tapered transition angle 222 of the second tapered transition region 206 may be adjusted to accommodate different joint configurations and to provide optimal joint strength and stability.

In some examples, a first parallel region 204 is positioned between the first tapered transition region 202 and the second tapered transition region 206. The outer surface of the first parallel region 204 is parallel to the rivet sleeve longitudinal axis 114. The first parallel region 204 has a first parallel region length 228 for instance equal to 0.67 times the stem head diameter 116. In one example, the rivet sleeve body portion outer diameter 110 in the first parallel region 204 is slightly smaller than the stem head diameter 116.

The first parallel region 204 is configured to deform and create at least one blindside bulb 316, 320 when compressed axially by the stem 108. In one example, the first parallel region 204 deforms to create two blindside bulbs 316, 320 when compressed axially by the stem 108 in a minimum grip configuration. The term "blindside" means a side of a first workpiece assembly 300 which is opposite to the front surface 408 through which the blind rivet 100 is inserted. That is, the blindside of the first workpiece assembly 300 is the same side as the rear surface 318 (shown in Figure 3b).

In another example, the first parallel region 204 deforms to create one blindside bulb 316 when compressed axially by the stem 108 in a maximum grip configuration. This accommodates various joint layer thicknesses.

In some examples, the second parallel region 208 is between the second tapered transition region 206 and a third tapered transition region 210. The outer surface of the second parallel region 208 is parallel to the rivet sleeve longitudinal axis 114. Optionally, the second parallel region 208 has a second parallel region length 230 equal to 0.29 times the stem head diameter 116. Optionally, the rivet sleeve body portion outer diameter 110 in the second parallel region 208 is for example 0.96 times the stem head diameter 116. The second parallel region 208 may have a similar length and diameter to the tail region 200.

In some examples, the rivet sleeve body portion 104 may comprise a third parallel region 212, positioned between the third tapered transition region 210 and the rivet sleeve head portion 106. As visible in Figure 2a, the axial length of the third tapered transition region 210 is much greater than the axial length of the third parallel region 212. In the second embodiment, depicted in Figure 2b, the axial length of the third parallel region 212is much greater than the axial length of the third tapered transition region 210. The outer surface of the third parallel region 212 is parallel to the rivet sleeve longitudinal axis 114. The rivet sleeve body portion outer diameter 110 in the third parallel region 212 is equal to the stem head diameter 116. The third parallel region 212 may not be present if the rivet sleeve body portion 104 is short.

In one example, the rivet sleeve body portion wall 112 has a thickness 218 for instance equal to 0.094 times the stem head diameter 116. This thickness provides sufficient strength and stability to the rivet sleeve body portion 104 while allowing for deformation and formation of blindside bulbs 316, 320.

In some examples, the rivet sleeve 102 comprises an elongate bore 214 that extends along the rivet sleeve longitudinal axis 114. The elongate bore 214 accommodates the stem 108 during the blind rivet installation process. In one example, the elongate bore internal diameter 216 varies along the rivet sleeve longitudinal axis 114 and between different regions of the rivet sleeve body portion 104. This variation in the elongate bore internal diameter 216 allows for a close fit between the stem 108 and the rivet sleeve body portion 104, providing high strength in the joint shear plane and carrying additional tensile loads.

The hardness of the tail region 200 (in Figure 2a) or the tail parallel region 200' (see Figure 2b) is, for instance, greater than a Vickers hardness of 200 Hv5. The second parallel region 208 may also have a Vickers hardness greater than 200 Hv5.

The stem 108 will now be discussed in more detail with respect to Figure 3. Figure 3 shows a cross-sectional view of the stem 108 without the rivet body according to an example. The stem 108 has a stem head 232, a stem underhead 234, a stem plain shank 238, a stem tapered region 240, a locking surface region 242, and a stem pulling tail 244.

The stem 108 is designed to be inserted into the rivet sleeve 102 and apply axial pressure to the rivet sleeve 102, causing the deformation of the first parallel region 204. In some examples, the stem 108 is made of hardened and tempered steel, providing very high strength and enhancing joint strength and stability.

In one example, the stem 108 comprises a stem head 232 positioned next to the stem plain shank 238. As discussed above, the stem head diameter 116 may optionally be used as a parameter for determining the dimensions of other components of the blind rivet 100. The stem head 232 may also include a stem head chamfer 236, which aids in guiding the assembled rivet into the holes of the joint being fastened.

Adjacent to the stem head 232 is the stem underhead 234, which is positioned between the stem head 232 and the stem plain shank 238. The stem underhead 234 engages the angled end face 224 of the tail region 200 of the rivet sleeve body portion 104. This engagement ensures a secure connection between the stem 108 and the rivet sleeve 102 during the deformation process. The stem underhead 234 links to the plain parallel stem plain shank 238 via a smooth radius, providing a smooth transition between the two components. The stem underhead 234 is optional in some examples.

In some examples, the stem 108 comprises a stem plain shank 238 positioned between the stem underhead 234 and the stem tapered region 240. The stem plain shank 238 has a close fit within the rivet body, providing high strength in the joint shear plane and carrying additional tensile loads. This close fit is for the proper functioning of the blind rivet 100, ensuring secure and permanent fastening of metal joints.

Adjacent to the stem plain shank 238 is the stem tapered region 240, which is positioned between the stem plain shank 238 and the locking surface region 242. The stem tapered region 240 may have a specific shape and size to facilitate the proper engagement and functioning of the stem 108 within the rivet sleeve 102.

In one example, the stem 108 comprises a locking surface region 242, which includes grooves and crests 248. The outer diameter of the locking surface region 242 is smaller than the outer diameter of the stem plain shank 238 and the elongate bore internal diameter 216 in the tail region 200 and the second parallel region 208. This difference in diameter ensures a secure engagement between the stem 108 and the rivet sleeve 102 during the deformation process.

Adjacent to the locking surface region 242 is the stem pulling tail 244, which can be of any suitable design. The stem pulling tail 244 may comprise a single pull groove 246, a helical thread, or a breaker groove. The breaker groove is designed to fracture at a predetermined load greater than required for full swaging of the rivet sleeve head portion 106. This ensures that the breaker groove remains intact after placing, and the tool 314 pulls to a predetermined force sufficient to enable full swaging of the rivet sleeve head portion 106.

In some examples, the stem 108 may remain intact after a fastening operation. Alternatively, the stem 108 may break at the breaker groove and the stem pulling tail 244 may be removed from the fastened blind rivet 100.

In various examples, the blind rivet 100 includes a stem 108 having a stem pulling tail 244 at one end thereof. The pulling tail 244 may optionally comprise either a helical thread or a single pull groove. The pulling tail may also comprise multiple annual grooves.

In examples featuring the helical thread, the stem pulling tail 244 includes continuous spiral ridges machined or cold-formed onto the exterior surface, providing multiple engagement points for the installation tool. This helical thread configuration enables a more controlled setting action and improved load distribution during installation.

Alternatively, in embodiments featuring the single pull groove, the stem pulling tail 244 includes a circumferential groove machined around the stem 108, creating a dedicated engagement feature for the installation tool. The single groove configuration facilitates a simpler, non-rotational pulling action that provides consistent, predictable pulling force across multiple installations.

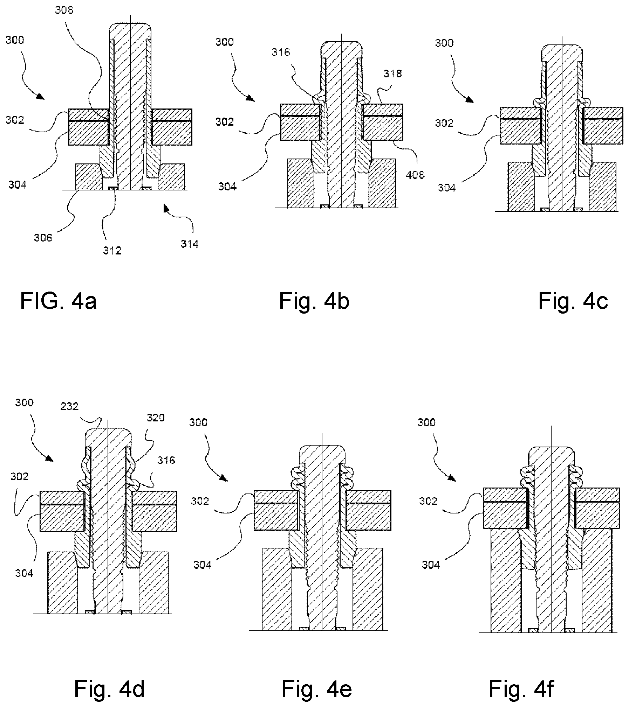

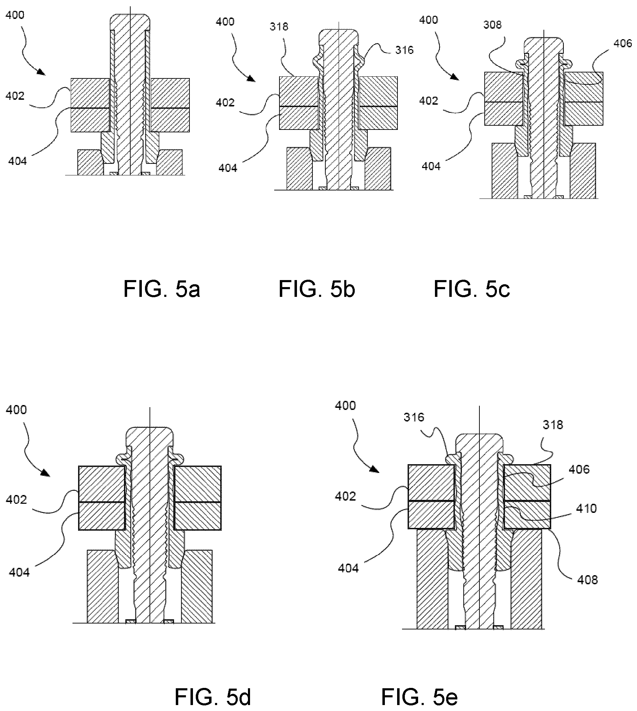

The blind rivet 100 will now be described during a fastening operation with different workpiece configurations. Figures 4a to 4f show a fastening operation of a blind rivet 100 for a thin first workpiece assembly 300 and Figures 5a to 5e show a fastening operation of a blind rivet 100 for a thick second workpiece assembly 400.

Turning to Figures 4a to 4f the fastening operation of the blind rivet 100 in a minimum grip configuration will now be discussed. Figures 4a to 4f sequentially show the blind rivet 100 in a minimum grip configuration during a fastening operation.

The first workpiece assembly 300 as shown in Figures 4a to 4f comprises a first workpiece 302 and a second workpiece 304. The first workpiece 302 and the second workpiece 304 are typically pieces of sheet metal. Here, the first workpiece assembly 300 is thin e.g., the first workpiece 302 and the second workpiece 304 only have a combined thickness of between 0.5 to 1 times the diameter of the stem head diameter 116.

The first workpiece assembly 300 is arranged to be fastened by the blind rivet 100 and the blind rivet 100 is inserted through a workpiece assembly hole 308. The blind rivet 100 is gripped by a tool 314. A tool anvil 306 is configured to grip the rivet sleeve head portion 106 and a gripping and pulling jaws 312 are configured to pull the stem 108 towards the rivet sleeve head portion 106. The tool 314, tool anvil 306 and the gripping and pulling jaws 312 of the tool 314 are known and will not be discussed in further detail.

Figure 4a shows a blind rivet 100 in a minimum grip configuration, before the blind rivet 100 is fastened. In the minimum grip configuration, the plane of the rear surface 318 of the first workpiece assembly 300 passes through the second tapered transition region 206 of the rivet sleeve body portion 104. This configuration provides versatility in joint strength and stability, accommodating various joint layer thicknesses.

In some examples, the blind rivet 100 in the minimum grip configuration forms two distinct bulbs when compressed axially by the stem 108, which will now be discussed. The term "bulb" refers to a deformation of material of the rivet sleeve 102 in the first parallel region 204. Specifically, the first and second bulbs 316, 320 are portions of the first parallel region 204 which crease and fold over creating a portion of the rivet sleeve 102 which bulges out in a direction perpendicular to the rivet sleeve longitudinal axis 114.

In Figure 4b, a first bulb 316 starts to form initially adjacent to a rear surface 318 of the first workpiece assembly 300 in the minimum grip configuration in response to the stem 108 exerting an axial force in the direction of the rivet sleeve longitudinal axis 114.

In Figure 4c, with continued movement of the stem 108, the first bulb 316 "folds-double," meaning the inner surface of the first bulb 316 contacts upon itself. This folding-double action allows for a more compact and secure connection between the joint layers.

In Figure 4d, further stem 108 travel results in the initial formation of a second bulb 320 between the stem head 232 and the first bulb 316. The formation of two distinct first and second bulbs 316, 320 provides additional versatility in joint strength and stability, accommodating various joint layer thicknesses.

In Figure 4e, the second bulb 320 has also "folded-double," and at this stage, the tool anvil 306 starts to swage the rivet sleeve head portion 106 of the rivet sleeve 102. The folding-double action of the second bulb 320 allows for an even more compact and secure connection between the joint layers. The fully formed first and second bulbs 316, 320 prevent the first workpiece assembly 300 from moving in a direction parallel to the rivet sleeve longitudinal axis 114 relative to the blind rivet 100.

As shown in Figure 4f, the first and second bulbs 316, 320 have been compacted axially. Furthermore, the rivet sleeve head portion 106 has been swaged fully.

During the swaging process, axial pressure is applied to the stem 108 using a tool anvil 306, causing the rivet sleeve head portion 106 to deform and flow radially inwards. This deformation allows the rivet sleeve head portion 106 to interlock with the stem locking surface region 242. This provides a secure and permanent connection between the rivet sleeve 102 and the stem 108.

The swaging process may be performed in various grip configurations, such as minimum grip configuration and maximum grip configuration. In each configuration, the swaging process ensures that the rivet sleeve head portion 106 is fully deformed and interlocked with the grooves and crests 248 in the locking surface region 242, providing a secure and permanent fastening of the metal joints.

The preferred range of Vickers hardness for the rivet sleeve 102 in the minimum grip configuration may be between 80 and 120 Hv5, providing an optimal balance between hardness and ductility for the rivet sleeve 102 material. This hardness range ensures that the rivet sleeve 102 can withstand the forces applied during the swaging process while still allowing for the necessary deformation to form the distinct first and second bulbs 316, 320.

In some examples, the rivet sleeve 102 preferably has a Vickers hardness in the range of 180-240 Hv5.

In some examples, the hardness of the rivet sleeve body portion 104 may vary along a direction along the rivet sleeve longitudinal axis 114. Specifically, the hardness may exhibit a gradient pattern or alternatively, in other examples, the transition between hardness zones may be more abrupt, with discrete changes occurring at predetermined positions along the sleeve.

Figures 5a to 5e sequentially show the blind rivet 100 in a maximum grip configuration during use according to an example.

The second workpiece assembly 400 as shown in Figures 5a to 5e comprises a third workpiece 402 and a fourth workpiece 404. The third workpiece 402 and the fourth workpiece 404 are typically pieces of sheet metal. Here, the second workpiece assembly 400 is thicker e.g., the third workpiece 402 and the fourth workpiece 404 have a combined thickness of between 1 to 1.5 times the diameter of the stem head diameter 116.

The second workpiece assembly 400 is arranged to be fastened by the blind rivet 100 and the blind rivet 100 is again inserted through a workpiece assembly hole 308. The blind rivet 100 is gripped by a tool 314. The operation of the tool 314 is the same as previously described with reference to Figures 4a to 4f.

In some examples, the blind rivet 100 is configured to be used in a maximum grip configuration, which allows for the accommodation of various joint layer thicknesses and provides versatility in joint strength and stability. The maximum grip configuration involves the formation of a single first bulb 316 and the swaging of the Rivet sleeve head portion 106 of the rivet sleeve 102.

Figure 4a shows a blind rivet 100 in a maximum grip configuration, before the blind rivet 100 is fastened in the second workpiece assembly 400. The plane of the rear surface 318 of the second workpiece assembly 400 passes through the first parallel region 204 of the rivet sleeve body portion 104.

Figure 5b shows that a first bulb 316 forms initially adjacent to the rear surface 318 of the second workpiece assembly 400 in a maximum grip configuration. This is similar to the formation of the first bulb 316 in the minimum grip configuration. However, the first bulb 316 initiates roughly at the transition between the first tapered transition region 202 and the first parallel region 204 and is remote from the rear surface 318 of the second workpiece assembly 400. That is, when the blind rivet 100 is fastened in the maximum grip configuration, the first bulb 316 does not engage the rear surface 318 of the second workpiece assembly 400.

Figure 5c shows the blind rivet 100 in the maximum grip configuration with continued stem 108 movement. At this point the first bulb 316 folds-double but remains remote from the rear surface 318 of the second workpiece assembly 400. Within the workpiece assembly hole 308 of the second workpiece assembly 400, at least one inner bulb 406 of the rivet sleeve body portion 104 has formed. In some examples the at least one inner bulb 406 is a first inner bulb 406 and a second inner bulb 410 as shown in Figure 4e. The first and second inner bulbs 406, 410 are constrained by the dimensions of the workpiece assembly hole 308 in the second workpiece assembly 400. The first inner bulb 406 advantageously provides hole filling in the rear of the joint of the second workpiece assembly 400.

As the stem 108 is pulled further, the hole-filling within the joint increases, and the first bulb 316 moves towards the second workpiece assembly 400, as shown in Figure 5d. The first bulb 316 is not quite in contact with the rear surface 318 of the second workpiece assembly 400 and swaging of the rivet sleeve head portion 106 has not started.

As shown in Figure 5e, the rivet sleeve head portion 106 of the rivet sleeve 102 has swaged fully with the tool anvil 306 close to the front surface 408 of the second workpiece assembly 400. The first bulb 316 has now seated fully upon the rear surface 318 of the joint and is more compacted axially. The rivet sleeve head portion 106 material has flowed radially inwards to interlock with the locking surface region 242 of the stem 108. This provides a secure and permanent fastening of the metal joints.

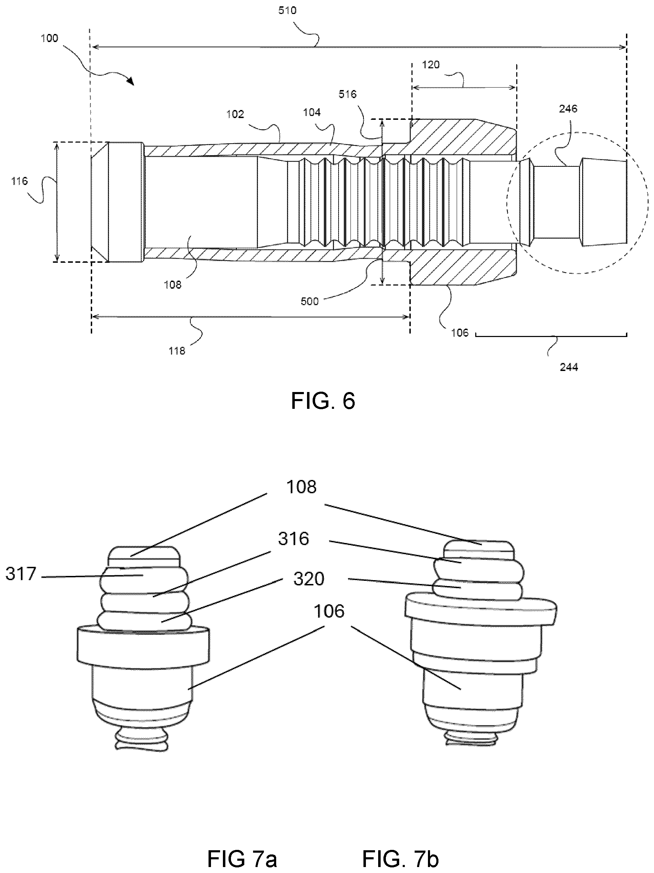

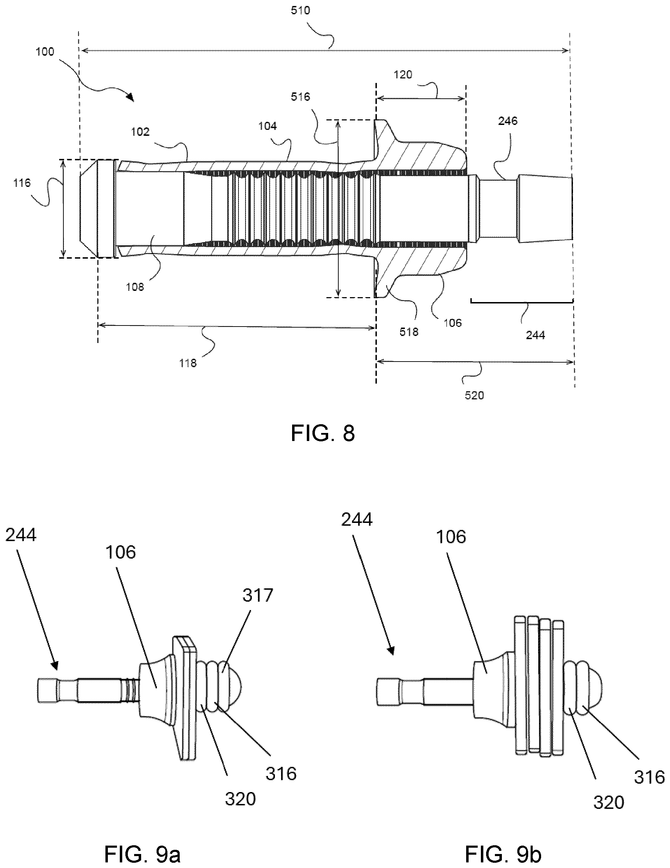

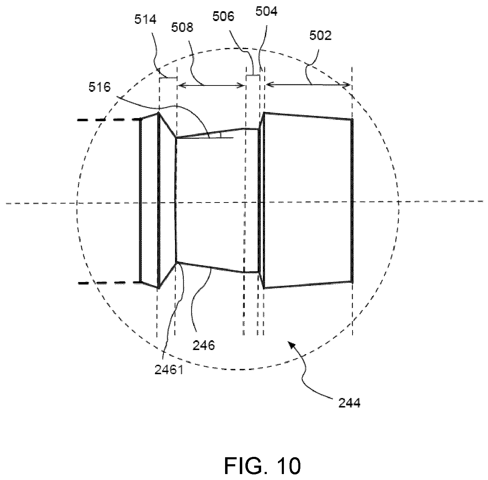

Other examples will now be discussed in reference to figures 6 and 8. Figures 6 and 8 show a blind rivet 100 which is similar to that shown in Figure 1 except that one or more dimensions of the blind rivet 100 have been modified. Figure 7a and Figure 7b schematically show a blind rivet 100 as shown in Figure 1 or 6 after a fastening operation. Figure 9a and Figure 9b schematically show a blind rivet 100 as shown in Figure 8 after a fastening operation. Figure 10 shows a close up view of the tail region 200.

The arrangement as shown in Figure 6 is the same as shown in Figure 1. However, the rivet sleeve body portion 104 comprises a sleeve shoulder 500. The sleeve shoulder 500 increases the diameter of the rivet sleeve body portion 104. Figure 5 shows a rivet total length 510.

In some examples, the rivet total length 510 varies between 56.48mm to 66.19mm. In some examples the sleeve body portion length 118 varies between 34.39mm to 43.84mm. The grip range of the rivet is related to the sleeve body portion length 118. A constant value is subtracted from the sleeve body portion length to determine the maximum grip, which is the maximum material thickness that the rivet can accommodate.

In some examples the stem head diameter 116 has a diameter of 13.86mm. Furthermore, the rivet sleeve head diameter 512 has a diameter of 19.27mm in some examples. The sleeve head portion length 120 has a length of 11.36mm in some examples.

The blind rivet 100 comprises a grip range, that is a range of material thicknesses that the blind rivet 100 can effectively join together.

Figure 7a shows the blind rivet 100 as shown in Figure 1 or 6 having been fastened in a first grip range configuration. As depicted in Figure 7a, three bulbs 320, 316, 317 are formed. Figure 7b shows the blind rivet 100 as shown in Figure 1 or 6 having been fastened in a second grip range configuration. As depicted in Figure 7b, two bulbs 320, 316 are formed. Here, the rivet sleeve 102 has deformed as shown in Figures 5a to 5e.

Figure 8 shows another blind rivet 100 according to some other examples. The blind rivet 100 as shown in Figure 8 is the same as shown in Figures 1 and 6 except that the profile of the rivet sleeve 102 and the rivet sleeve head portion 106 has been modified. The blind rivet 100 as shown in Figure 7 has a similar rivet sleeve body portion 104 profile and functions in the same way as previously discussed in reference to the previous figures.

The rivet sleeve head portion 106 comprises a rivet sleeve head flange 518. The rivet sleeve head flange 518 projects outwardly from the rivet sleeve head portion 106. Accordingly, the rivet sleeve head flange 518 is the widest part of the blind rivet 100. As shown in Figure 8, in some examples, the rivet sleeve head flange 518 projects outwardly at an angle to the rivet sleeve longitudinal axis 114. In some examples, the rivet sleeve head flange 518 alternatively, projects perpendicularly from the rivet sleeve head portion 106.

The blind rivet 100 as shown in Figure 8 has the dimensions as set out for example 5 in the table.

Figure 8 shows the rivet sleeve head to stem tail length. In some examples, rivet sleeve head to stem tail length 520 is between 25.89mm to 34.80mm. In some examples, when the rivet sleeve head to stem tail length 520 is 34.80mm. In some other examples, when the rivet sleeve head to stem tail length 520 is 25.89mm.

Figure 9a shows the blind rivet 100 as shown in Figure 8 having been fastened in a first grip range configuration, with three bulbs 320, 316, 317. Figure 9b shows the blind rivet 100 as shown in Figure 8 having been fastened in a second grip range configuration, with two bulbs (or bulges) 320, 316.

Figures 1, 6 and 8 show a stem pulling tail 244 of the stem 108 with single pull groove 246 wherein the surface of the single pull groove 246 extends in a direction parallel to the rivet sleeve longitudinal axis 114. However, each of the arrangements as shown in Figures 1, 6 and 8 can have an alternative arrangement as shown in Figure 10.

Figure 10 shows a stem pulling tail 244 of the stem 108 with single pull groove 246 wherein the surface of the single pull groove 246 is tapered. That is at least one surface of the single pull groove 246 is inclined with respect to the rivet sleeve longitudinal axis 114.

The end portion of the stem pulling tail 244 comprises a tail first tapered region 502. The tail first tapered region 502 increases in diameter in a direction towards the single pull groove 246. At the transition of the single pull groove 246, the tail first tapered region 502 is connected to a tail second tapered region 504. Here the tail second tapered region 504 decreases in diameter sharply to define the single pull groove 246. Optionally a tail parallel region 506 is connected to the tail second tapered region 504. In other examples, the tail parallel region 506 is omitted. Next the single pull groove 246 comprises a tail third tapered region 508. The tail third tapered region 508 tapers and decreases in diameter in a direction away from the tail second tapered region 504. The tail third tapered region 508 narrows to a narrowest point 2461 of the single pull groove 246. Here the tail third tapered region 508 is connected to a tail fourth tapered region 514 which increases in diameter. The single pull groove 246 is defined by the narrow stem portion between the tail fourth tapered region 514 and the tail second tapered region 504. The third tail tapered region 508 is inclined with respect to the rivet sleeve longitudinal axis 114 by a tail third tapered portion angle 516. The tail third tapered portion angle 516 is between 1 degree to 5 degrees.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. **It** will be understood that these terms and those discussed above are intended to encompass different orientations of the device in addition to the orientation depicted in the Figures. **It** will be understood that when an element is referred to as being "connected" or "coupled" to another element, it can be directly connected or coupled to the other element, or intervening elements may be present. **In** contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A blind rivet (100) comprising:
a cold-formed rivet sleeve (102) having a body portion (104) and a head portion (106), the body portion having a first tapered transition region (202) and a second tapered transition region (206) and a first parallel region (204) between the first tapered transition region (202) and the second tapered transition region (206),wherein the first parallel region (204) is configured to deform to create at least one blindside bulb (316) when compressed axially (108); and
a stem (108) configured to be inserted into the rivet sleeve (102) and to apply axial pressure to the rivet sleeve (102) to cause the deformation of the first parallel region (204).

2. The blind rivet (100) according to claim 1, wherein the rivet sleeve (102) further comprises a second parallel region (208) adjacent to the second tapered transition region (206).

3. The blind rivet (100) according to claim 2, wherein the rivet sleeve (102) further comprises a third tapered transition region (210) adjacent to the second parallel region (208).

4. The blind rivet (100) according to any one of claims 1 to 3, wherein the rivet sleeve (102) is made of low-carbon steel.

5. The blind rivet (100) according to any one of claims 1 to 4, wherein the stem (108) is made of hardened and tempered steel.

6. The blind rivet (100) according to any one of claims 1 to 5, wherein the first parallel region (204) is configured to deform to create two or three blindside bulbs (316, 320) when compressed axially by the stem (108) in a minimum grip configuration and/or wherein the first parallel region (204) is configured to deform to create one blindside bulb (316) when compressed axially by the stem (108) in a maximum grip configuration.

7. The blind rivet (100) according to any one of claims 1 to 6, wherein the first tapered transition region (202) has an angle (220) with respect to the rivet sleeve longitudinal axis (114) in a range of 1.4° to 3.2°, and in particular of 2.3°.

8. The blind rivet (100) according to any one of claims 1 to 9, wherein the second tapered transition region (206) has an angle (222) with respect to the rivet sleeve longitudinal axis (114) in a range of 4.8° to 6.6°, and in particular of 5.7°.

9. The blind rivet (100) according to any one of claims 1 to 8, wherein the rivet sleeve (102) has a hardness in a range of Vickers hardness 180 - 240 Hv5. (

10. The blind rivet (100) according to any one of claims 1 to 9, wherein the rivet sleeve body portion (104) has an outer diameter (110) a the tail region (200, 198') that is between 0.93 and 0.99 times the stem head diameter (116).

11. The blind rivet (100) according to any one of claims 1 to 10, wherein the first parallel region (204) has a length (228) between 0.64 and 0.70 times the stem head diameter (116).

12. The blind rivet (100) according to any one of claims 1 to 11, wherein the rivet sleeve body portion (104) has an outer diameter (110) in the first parallel region (204) that is slightly smaller than the stem head diameter (116).

13. The blind rivet (100) according to any one of claims 1 to 12, wherein the rivet sleeve body portion wall (112) has a thickness (218) between 0.090 and 0.098 times the stem head diameter (116).

14. The blind rivet (100) according to any one of claims 1 to 13 wherein the rivet sleeve (102) is not heat treated.

15. The blind rivet (100) according to any one of the claims 1 to 14 wherein the stem (108) comprises a stem pulling tail (244) having a pull groove (246) wherein the pull groove (246) comprises at least one tapered surface inclined with respect to a longitudinal axis 114.

16. The blind rivet (100) according to any one of the claims 1 to 15, wherein a tail tapered region (199') and a tail parallel region (200') are provided between the first tapered region (202) and an end face (224) of a tail region (198'),

17. A method of fastening the blind rivet (100) according to any one of claims 1 to 16, comprising the steps of:
inserting the blind rivet (100) into a hole in a workpiece;
aligning the blind rivet (100) with a desired joint configuration;
applying axial pressure to the stem (108) of the blind rivet (100) using a tool anvil (306); and
forming at least one blindside bulb (316, 320) by deforming the first parallel region (204) of the rivet sleeve (102).

18. The method according to claim 17, further comprising the step of swaging the head portion (106) of the rivet sleeve (102) using the tool anvil (306) to secure the joint.

19. A method of manufacturing the blind rivet (100) according to any one of claims 1 to 18, comprising the steps of:
cold-heading the rivet body to form the tubular shape; and
creating the profiled shape in the tubular body, comprising larger and smaller parallel regions separated by tapered transitions.

20. The method according to claim 19, wherein the profiled shape is created by cold-forming the tubular body.
